# EUROPÄISCHE PATENTSCHRIFT

(11) **EP 2 000 787 B1**
(45) Veröffentlichungstag und Bekanntmachung des Hinweises auf die Patenterteilung: **11.07.2012**
(21) Anmeldenummer: 08009309.9
(22) Anmeldetag: 20.05.2008
(51) Int. Cl.: G01K 1/14, G01D 11/30

(54) **Vorrichtung zur Befestigung eines Sensors an einem Rohr**
Device for attaching a sensor to a tube
Dispositif de fixation d'un capteur sur un tuyau

(30) Priorität: 23.05.2007 DE 102007023877
(43) Veröffentlichungstag der Anmeldung: 10.12.2008
(73) Patentinhaber: Epcos AG, 81669 München (DE)
(72) Erfinder: Grundmann, Wolfgang, 16547 Birkenweder (DE); Bard, Oliver, 14612 Falkensee (DE)
(74) Vertreter: Epping - Hermann - Fischer

(56) Entgegenhaltungen:
- FR-A1- 2 638 522
- US-A1- 2005 006 535

## Beschreibung

Es wird eine Vorrichtung beschrieben, die für die Aufnahme und Befestigung eines Sensors an Rohren mit unterschiedlichem Durchmesser dient.

Aus der Druckschrift DE 103 58 778 A1 ist ein Temperatursensor bekannt.

Die Druckschrift FR 2 638 522 A1 beschreibt eine Temperaturmessvorrichtung mit einem Messfühler, der auf einem Träger montiert ist und sich in Kontakt mit einem Rohr befindet, dessen Temperatur gemessen werden soll. Die Temperaturmessvorrichtung weist einen Körper auf, an dessen oberem Bereich der Messfühler und der Träger angeordnet sind und dessen unterer Bereich eine Aussparung aufweist, in der das Rohr angeordnet werden kann. Der Messfühler wird mittels einer Feder gegen das Rohr gedrückt.

In der Druckschrift US 2005/006535 A1 ist eine Klemmvorrichtung 10 zur Befestigung eines Rohres 22 an einem Träger beschrieben. Die Klemmvorrichtung 10 weist ein Sockelelement 12 auf, das mittels zweier Bügelarme 16 lösbar mit einem Befestigungselement 14 verbunden ist.

Eine zu lösende Aufgabe besteht darin, eine Sensorbefestigung anzugeben, die eine Befestigung für einen Sensor an Rohren mit unterschiedlichem Rohrdurchmesser bereitstellt.

Diese Aufgabe wird durch eine Vorrichtung mit den Merkmalen des unabhängigen Patentanspruchs 1 gelöst.

Die Sensorbefestigung umfasst einen Sockel, in den ein Sensor zur Erfassung von physikalischen Messgrößen integriert ist, und einen Bügel. Der Sockel und der Bügel sind mechanisch miteinander verbunden. An der Basis des Bügels befindet sich ein elastisches Element.

Vorteilhaft umfasst das elastische Element eine Feder aus Stahl, oder aus einem anderen Werkstoff, der dauerhaft elastisch oder elastisch komprimierbar ist.

Bei dem Sensor kann es sich um verschiedene Arten von Sensoren handeln, die zur Aufnahme von physikalischen Messgrößen dienen. Vorzugsweise handelt es sich hierbei um einen Temperatursensor. Insbesondere ist ein Temperatursensor vorgesehen, der die Oberflächentemperatur eines Rohres misst, an dem der Sensor befestigt ist.

Die Sensorbefestigung wird vorzugsweise zur Aufnahme eines Sensors zur Messung der Temperatur eines Fluids verwendet. Das Fluid kann dabei entweder ein gasförmiges oder ein flüssiges Medium sein. Zur Messung der Temperatur des Fluids beziehungsweise des Mediums wird der Sensor dabei nicht in den Behälter des Mediums eingeführt, sondern lediglich an die Außenfläche des Behälters herangeführt. Dadurch können potentielle Leckstellen im Medienbehälter, beispielsweise in einem Rohr, in dem das Medium fließt, vermieden werden.

Um zu einer möglichst exakten Temperaturmessung zu gelangen, ist es erstrebenswert, dass der Messfühler die zu messende Temperatur annimmt. Daher ist es wichtig, dass eine gute thermische Kopplung zwischen dem Messfühler und dem Messobjekt sichergestellt ist.

Damit das Rohr, dessen Oberflächentemperatur gemessen werden soll, Kontakt zu dem Sensor bekommt, ist das Rohr über einen Bügel mit dem Sockel verbunden.

Um eine mechanische Verbindung zwischen Sockel und Bügel herzustellen, werden diese vorzugsweise mittels einer verstellbaren Befestigung miteinander verbunden. Dadurch ist die Sensorbefestigung nicht auf Rohre mit einem bestimmten Durchmesser festgelegt. Bei der Erfindung werden Rasten und Gegenrasten verwendet, wodurch es möglich ist, den Sockel und den Bügel nicht nur in einer bestimmten Stellung miteinander zu verbinden.

Dafür befinden sich an mindestens einer Seite der Arme des Bügels Zahnreihen. Die Zahnreihen befinden sich vorzugsweise im Endbereich der seitlichen Arme. Am Sockel befinden sich an den schmalen Seiten entsprechend den Zahnreihen des Bügels gestaltete Gegenzahnreihen. Durch diese Zahn- und Gegenzahnreihen ist ein stufenartiges Einrasten des Bügels auf den Sockel möglich. Durch das stufenartige Einrasten ist es möglich, Rohre mit unterschiedlichem Durchmesser in die Sensorbefestigung aufzunehmen.

Damit der eingerastete Bügel nicht seitlich vom Sockel abrutschen kann, befindet sich am Bügel eine Vorrichtung, die das Abrutschen verhindert. In einer bevorzugten Ausführungsform befinden sich an den Bügelarmen eine oder mehrere Führungsnuten, die in Längsrichtung der Arme angeordnet sind. Auf zwei Seiten des Sockels befinden sich ein oder mehrere Führungsstege, vorzugsweise in dem Bereich der Gegenzähne. Die Führungsstege verlaufen vorzugsweise parallel zu den Führungsnuten bzw. senkrecht zu den Gegenzähnen. Jeder Führungssteg weist vorzugsweise in etwa den Außenquerschnitt auf, der dem Innenquerschnitt der zugeordneten Führungsnut der Bügelarme entspricht, so dass der Führungssteg in die Führungsnut eingeführt werden kann. Alternativ können sich die Führungsnuten auch an dem Sockel und die Führungsstege an dem Bügel befinden.

Damit das Rohr einen optimalen Kontakt zu dem Sensor bekommt, ist der Bügel in einer Ausführungsform in dem Bereich der Basis zwischen den Bügelarmen mit Einführungsschrägen versehen, so dass ein fließender Übergang der Bügelgeometrie des Bügelquerschnitts zu den Armen hin erfolgen kann. Dies dient vorzugsweise einer Art von Vorzentrierung des Rohres, so dass das Rohr mittig auf dem Sockel aufliegt, und so ein optimaler Kontakt zu dem Messfühler gewährleistet ist.

Die Feder ist vorzugsweise so in einem an der Außenseite des Bügels angebrachten Behälter befestigt, dass ein Teil der Feder in den Raum ragt, der durch die Arme des Bügels gebildet wird. Zur Befestigung der Feder in dem Behälter, befinden sich auf der Innenseite der Außenabdeckung des Behälters vorzugsweise Rasten oder anderweitige Befestigungsvorrichtungen.

Bei der Verwendung von anderen elastischen Werkstoffen sind der Behälter und die Rasten nicht notwendig. Diese elastischen Elemente können durch Kleben oder andere Befestigungsarten auf der Innenseite des Bügels fixiert werden.

Bei Verwendung einer Sensorbefestigung ist es besonders vorteilhaft, wenn der Messfühler in einer Vertiefung angeordnet ist. Dadurch kann die thermische Entkopplung zwischen dem hervorstehenden Abschnitt des Messfühlers, der gemäß einer bevorzugten Ausführungsform ein temperatursensitives Element enthält, und dem verdeckten Abschnitt des Messfühlers verbessert werden und somit für eine genauere Temperaturmessung gesorgt werden.

Daher ist, für die Aufnahme eines Rohres in die Sensorbefestigung, die Oberseite des Sockels vorzugsweise in der Art gestaltet, dass sie einem teilrunden Zylinder entspricht. Diese teilrunde Zylinderoberfläche hat an dem Scheitelpunkt eine kanalförmige Vertiefung, die vorzugsweise in etwa doppelt so breit wie tief ist. In der Mitte dieser Vertiefung befindet sich eine Öffnung, durch die der Messfühler des Sensors geführt wird. Der Messfühler ragt über die Verlängerung des Radius des teilrunden Zylinders einige Millimeter hinaus. Dies hat den Vorteil, dass selbst bei einem Rohr, das den für die Sensorbefestigung spezifizierten maximal Durchmesser aufweist, noch eine isolierende Luftschicht zwischen der teilrunden Zylinderoberfläche und der Oberfläche des fixierten Rohres vorhanden ist.

Durch eine derart gestaltete Vertiefung kann dafür gesorgt werden, dass der Fühlerhalter mit dem vorstehenden Teil des Messfühlers keinen direkten Kontakt hat und somit die thermische Entkopplung zwischen dem vorderen Teil des Messfühlers - der in der Messapplikation in thermischem Kontakt mit dem Messobjekt steht - und dem Fühlerhalter verbessert ist.

Um den Sensor beispielsweise mit einem Datenerfassungsgerät zu verbinden, befinden sich bei einer Ausführungsform an der Außenseite des Sockels wenigstens zwei Metallstifte, die mit dem Messfühler elektrisch verbunden sind.

Gemäß einer Ausführungsform ist die Sensorbefestigung so gestaltet, dass die Sensorbefestigung durch den Bereich, in dem sich Rasten an den Bügelarmen befinden, und den Bereich, in dem sich die Gegenrasten am Sockel befinden, für einen Durchmesserbereich der aufnehmbaren Rohre definiert ist.

Die durch die Stufen der Rasterung entstehenden Freiräume und auftretende Änderungen des Rohrdurchmessers durch Temperaturschwankungen werden durch die Verwendung des Federelementes ausgeglichen. Somit wird das Rohr mit dem notwendigen Anpressdruck an den Messfühler gedrückt.

In einer Ausführungsform ist die Sensorbefestigung so gestaltet, dass sie für Rohre mit einem Außendurchmesser von 12 - 17 mm geeignet ist. Es sind jedoch auch andere, auch größere Bereiche möglich. Der Aufnahmebereich wird nur durch die Gestaltung der Bereiche der Rasten und Gegenrasten begrenzt.

Um beispielsweise die Oberflächentemperatur eines Mediendurchflossenen Rohres zu messen, wird der Sockel auf dem Rohr positioniert, so dass der Messfühler Kontakt mit dem Rohr hat. Um das Rohr wird nun der Bügel so weit auf den Sockel geschoben, bis das Federelement Kontakt mit dem Rohr bekommt und auf das Rohr einen Anpressdruck ausübt. In dieser Position wird der Bügel über die Rasten in der nächstmöglichen Stufenposition mit dem Sockel verrastet.

Die Sensorbefestigung wird im Folgenden anhand von Ausführungsbeispielen und den dazugehörigen Figuren näher erläutert. Die Figuren zeigen anhand schematischer und nicht maßstabsgetreuer Darstellungen verschiedene Ausführungsbeispiele. Gleiche oder gleich wirkende Teile sind mit gleichen Bezugszeichen bezeichnet.
Figur 1 zeigt eine beispielhafte Sensorbefestigung.
Figuren 2a und 2b zeigen eine beispielhafte Sensorbefestigung mit Rohren unterschiedlichen Durchmessers.

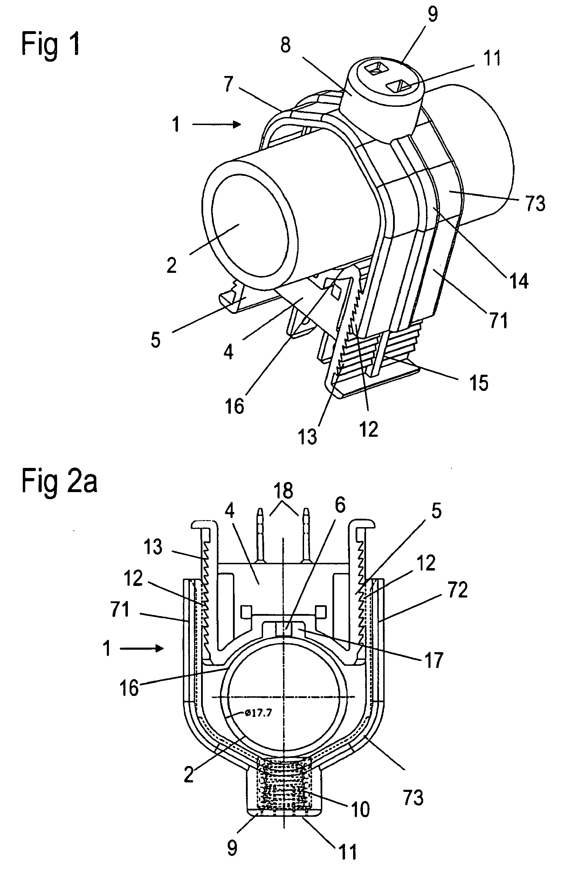

Figur 1 zeigt eine Sensorbefestigung 1 in dreidimensionaler Darstellung. Diese besteht aus einem Sensor 4, der in einen Sockel 5 eingebettet ist. Zur Fixierung des Rohres 2 auf dem Sockel 5 wird ein Bügel 7 verwendet, der das Rohr 2 U-förmig umschließt und mit dem Sockel 5 über eine Rasterung eine mechanische Verbindung eingeht. An der Basis 73 des Bügels 7 befindet sich ein Behälter 8 mit einer Abdeckung 9 auf der Außenseite. In dem zylindrischen Behälter 8 befindet sich ein Federelement 10, das über Rasten 11 in der Abdeckung 9 fixiert sein kann und das auf das Rohr 2 einen Anpressdruck ausübt. Des weiteren dient das Federelement 10 dazu, die Stufen der Rasterung der Bügelbefestigung, sowie eine Materialermüdung und eine temperaturbedingte Ausdehnungstoleranz entsprechend zu kompensieren.

Der Bügel 7, der das Rohr 2 mit dem Sensor 4 in Kontakt bringt ist so gestaltet, dass ein rechter Arm 72 und ein linker Arm 71 des Bügels 7 das Rohr 2 seitlich umfassen und mit dem Sockel 5 eine mechanische Verbindung eingehen. Dabei ist der Bügel 7 im Bereich der Basis 73 in etwa halbrund ausgebildet, damit eine Vorzentrierung des Rohres 2 in der Sensorbefestigung 1 erfolgt.

Um die mechanische Verbindung des Bügels 7 mit dem Sockel 5 zu gewährleisten, sind an den Innenseiten des rechten Armes 72 und des linken Armes 73 Zahnreihen 12 angebracht. Auf den schmäleren Außenseiten des Sockels 5 befinden sich entsprechend gestaltete Gegenzähne 13. Um eine seitliche Fixierung des Bügels 7 auf dem Sockel 5 zu gewährleisten, befindet sich mittig im Bereich der Zahnreihen 12 auf dem rechten Arm 72 und auf dem linken Arm 73 eine Führungsnut 14. Auf der Außenseite des Sockels 5 im Bereich der Gegenzähne 13 befindet sich, formschlüssig passend zu der Führungsnut 14, ein Führungssteg 15. Der Führungssteg 15 ist so gestaltet, dass er in die Führungsnut 14 bündig hineingleiten kann.

Figur 2a zeigt eine Sensorbefestigung 1 in seitlicher Ansicht. Bei der Sensorbefestigung ist die Oberfläche des Sockels 5, die zur Aufnahme des Rohres 2 dient, entsprechend eines teilrunden Zylinders 16 gestaltet, an dessen tiefstem Punkt sich ein Kanal 17 befindet. Der Kanal 17 hat eine Breite, die doppelt so groß ist, wie die Tiefe des Kanals 17. Die halbe Breite des Kanals 17 entspricht in etwa dem Durchmesser des Messfühlers 6.

Der Messfühler 6 des Sensors 4 befindet sich in der Mitte des Kanals 17, so dass der Messfühler 6 des Sensors 4 so weit aus dem Sockel 5 ragt, dass er über den Rand des weitergeführten Radius des halbrunden Zylinders 16 hinausragt. Auf der Gegenseite des Sensors befinden sich vorzugsweise zwei Kontaktstifte 18 zum elektrischen Anschluss des Sensors 4.

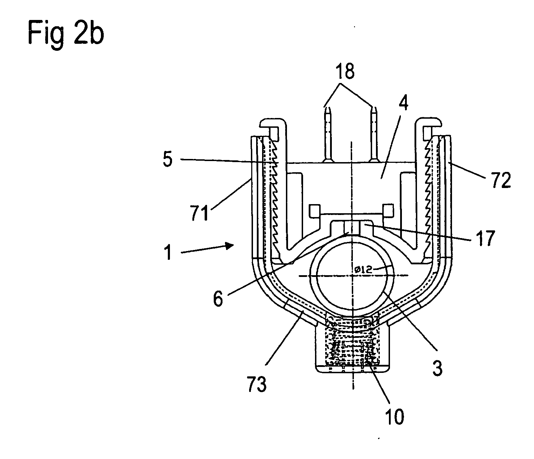

Figur 2b zeigt eine Sensorbefestigung 1 nach Figur 2a, bei der das Rohr 3 einen kleineren Durchmesser aufweist als in Figur 2a.

Obwohl in den Ausführungsbeispielen nur eine beschränkte Anzahl möglicher Weiterbildungen der Erfindung beschrieben werden konnte, ist die Erfindung nicht auf diese beschränkt. Es ist prinzipiell möglich, die Form des Sockels oder die Bereiche mit Rasten auch auf andere Art und Weise zu wählen. Die Erfindung ist nicht auf die Anzahl der schematisch dargestellten Elemente beschränkt, sondern nur auf den Gegenstand der Ansprüche.

### Bezugszeichenliste

- 1: Sensorbefestigung
- 2, 3: Rohr
- 4: Sensor
- 5: Sockel
- 6: Messfühler
- 7: Bügel
- 71: erster Arm des Bügels 7
- 72: zweiter Arm des Bügels 7
- 73: Basis des Bügels 7
- 8: Behälter
- 9: Abdeckung
- 10: elastisches Element
- 11: Rasten
- 12: Zahnreihen
- 13: Gegenzähne
- 14: Führungsnut
- 15: Führungssteg
- 16: zylinderförmige Innenseite
- 17: Kanal
- 18: Kontaktstifte

## Patentansprüche

1. Vorrichtung zur Befestigung eines Sensors an einem Rohr,
- aufweisend einen Bügel (7) und einen Sockel (5), die mechanisch miteinander verbunden sind,
- mit einem Sensor (4) zur Erfassung einer physikalischen Messgröße, der sich in dem Sockel (5) befindet, und
- mit einem elastischen Element (10) im Bereich einer Basis (73) des Bügels,
- wobei der Bügel (7) einen ersten Arm (71) und einen zweiten Arm (72) aufweist, die über die Basis (73) des Bügels (7) miteinander verbunden sind,
- wobei der Bügel (7) mit dem Sockel (5) über eine veränderbare Befestigung verbunden ist, und
- wobei der erste Arm (71) und der zweite Arm (72) Zahnreihen (9) aufweisen und wobei sich auf den gegenüberliegen schmalen Seiten des Sockels (5) Gegenzähne (13) befinden, die sich mit den Zahnreihen (9) der Arme (71, 72) verrasten lassen.

2. Vorrichtung nach Anspruch 1
bei der das elastische Element (10) in Form einer Feder ausgeführt ist.

3. Vorrichtung nach einem der vorhergehenden Ansprüche,
bei der der Sensor (4) einen Temperatursensor umfasst.

4. Vorrichtung nach einem der vorhergehenden Ansprüche,
bei der sich die Zahnreihen (9) und die Gegenzähne (13) stufenweise miteinander verrasten lassen.

5. Vorrichtung nach einem der vorhergehenden Ansprüche,
bei dem der Bügel (7) und der Sockel (5) eine Vorrichtung aufweisen, die ein gegenseitiges seitliches Abrutschen verhindert.

6. Vorrichtung nach einem der vorhergehenden Ansprüche,
bei der der erste Arm (71) und/oder der zweite Arm (72) wenigstens eine Führungsnut (11) aufweisen und bei der der Sockel (4) auf einer schmalen Seite wenigstens einen Führungssteg (12) aufweist, der in der Führungsnut führbar ist.

7. Vorrichtung nach einem der vorhergehenden Ansprüche,
bei der die Basis (73) des Bügels zu den Armen (71, 72) hin geschrägte Übergänge aufweist.

8. Vorrichtung nach einem der vorhergehenden Ansprüche,
bei der der Bügel (7) an der Außenseite seiner Basis (73) einen Behälter (8) zur Aufnahme des elastischen Elements (10) aufweist.

9. Vorrichtung nach einem der vorhergehenden Ansprüche,
bei der der Sockel (5) auf seiner rohrseitigen Oberfläche (16) konkav-teilzylinderförmig ausgebildet ist.

10. Vorrichtung nach Anspruch 9,
bei der der Sockel am Scheitelpunkt der teilzylinderförmigen Oberfläche einen Kanal (17) aufweist.

11. Vorrichtung nach Anspruch 10,
bei der sich in dem Kanal (17) ein Messfühler (6) des Sensors (4) befindet, der in den Innenraum, der von der teilzylinderförmigen Oberfläche (16) gebildet wird, hineinragt und mit Kontakten elektrisch leitend verbunden ist.

12. Vorrichtung nach einem der Ansprüche 9 bis 11,
bei der der Radius der teilzylinderförmigen Oberfläche (16) des Sockels (4) dem Radius des größten für die Vorrichtung vorgesehenen Rohres (2; 3) entspricht.

## Claims

1. Device for fastening a sensor to a pipe,
- having a bracket (7) and a mount (5) which are mechanically interconnected,
- having a sensor (4) for sensing a physical measurement variable, said sensor (4) being located in the mount (5), and
- having an elastic element (10) in the region of a base (73) of the bracket,
- wherein the bracket (7) has a first arm (71) and a second arm (72) which are interconnected via the base (73) of the bracket (7),
- wherein the bracket (7) is connected to the mount (5) via a modifiable fastening means, and
- wherein the first arm (71) and the second arm (72) have rows of teeth (9), and wherein counterpart teeth (13) are located on the opposite narrow sides of the mount (5), it being possible for said counterpart teeth (13) to be latched with the rows of teeth (9) on the arms (71, 72).

2. Device according to Claim 1,
in which the elastic element (10) is configured in the form of a spring.

3. Device according to either of the preceding claims,
in which the sensor (4) comprises a temperature sensor.

4. Device according to one of the preceding claims,
in which the rows of teeth (9) and the counterpart teeth (13) can be latched with one another incrementally.

5. Device according to one of the preceding claims,
in which the bracket (7) and the mount (5) have a device which prevents mutual lateral slippage.

6. Device according to one of the preceding claims,
in which the first arm (71) and/or the second arm (72) have at least one guiding groove (11), and in which the mount (5) has at least one guiding ridge (12) on a narrow side, said guiding ridge (12) being guidable in the guiding groove.

7. Device according to one of the preceding claims,
in which the base (73) of the bracket has transitions inclined towards the arms (71, 72).

8. Device according to one of the preceding claims,
in which the bracket (7) has a container (8) on the outer side of its base (73) for accommodating the elastic element (10).

9. Device according to one of the preceding claims,
in which the mount (5) is formed in a concave/partially cylindrical manner on its pipe-side surface (16).

10. Device according to Claim 9,
in which the mount has a channel (17) at the vertex of the partially cylindrical surface.

11. Device according to Claim 10,
in which a detector (6) of the sensor (4) is located in the channel (17), said detector (6) projecting into the internal space formed by the partially cylindrical surface (16) and being connected to contacts in an electrically conductive manner.

12. Device according to one of Claims 9 to 11,
in which the radius of the partially cylindrical surface (16) of the mount (5) corresponds to the radius of the largest pipe (2; 3) provided for the device.

## Revendications

1. Dispositif de fixation d'un capteur sur un tuyau,
- présentant un arceau (7) et un socle (5), qui sont raccordés mécaniquement l'un à l'autre,
- avec un capteur (4) pour détecter une grandeur de mesure physique, lequel capteur se trouve dans le socle (5), et
- avec un élément élastique (10) dans la région d'une base (73) de l'arceau,
- l'arceau (7) présentant un premier bras (71) et un deuxième bras (72), qui sont raccordés l'un à l'autre par la base (73) de l'arceau (7),
- l'arceau (7) étant raccordé au socle (5) par une fixation variable, et
- le premier bras (71) et le deuxième bras (72) présentant des rangées de dents (9) et des dents conjuguées (13) se trouvant sur les côtés étroits opposés du socle (5), lesquelles dents conjuguées peuvent s'engrener avec les rangées de dents (9) des bras (71, 72).

2. Dispositif selon la revendication 1, dans lequel l'élément élastique (10) est réalisé sous forme de ressort.

3. Dispositif selon l'une quelconque des revendications précédentes, dans lequel le capteur (4) comprend un capteur de température.

4. Dispositif selon l'une quelconque des revendications précédentes, dans lequel les rangées de dents (9) et les dents conjuguées (13) peuvent être engrenées les unes avec les autres de manière graduelle.

5. Dispositif selon l'une quelconque des revendications précédentes, dans lequel l'étrier (7) et le socle (5) présentent un dispositif qui empêche un glissement latéral mutuel.

6. Dispositif selon l'une quelconque des revendications précédentes, dans lequel le premier bras (71) et/ou le deuxième bras (72) présentent au moins une rainure de guidage (11), et dans lequel le socle (4) présente, sur un côté étroit au moins une nervure de guidage (12), qui peut être guidée dans la rainure de guidage.

7. Dispositif selon l'une quelconque des revendications précédentes, dans lequel la base (73) de l'arceau présente des transitions biseautées vers les bras (71, 72).

8. Dispositif selon l'une quelconque des revendications précédentes, dans lequel l'arceau (7) présente, du côté extérieur de sa base (73), un récipient (8) pour recevoir l'élément élastique (10).

9. Dispositif selon l'une quelconque des revendications précédentes, dans lequel le socle (5) est réalisé sous forme cylindrique partielle (16) concave sur sa surface du côté du tuyau.

10. Dispositif selon la revendication 9, dans lequel le socle présente un canal (17) au sommet de la surface de forme cylindrique partielle.

11. Dispositif selon la revendication 10, dans lequel un palpeur de mesure (6) du capteur (4) se trouve dans le canal (17), lequel pénètre dans l'espace intérieur qui est formé par la surface de forme cylindrique partielle (16) et est connecté de manière électriquement conductrice à des contacts.

12. Dispositif selon l'une quelconque des revendications 9 à 11, dans lequel le rayon de la surface de forme cylindrique partielle (16) du socle (4) correspond au rayon du plus grand tuyau (2 ; 3) prévu pour le dispositif.
